(19) Europäisches Patentamt
European Patent Office
Office européen des brevets

(11) **EP 4 556 260 A1**

(12) **EUROPEAN PATENT APPLICATION**

(43) Date of publication:
**21.05.2025 Bulletin 2025/21**

(21) Application number: **23210299.6**

(22) Date of filing: **16.11.2023**

(51) International Patent Classification (IPC):
**B60C 11/24** (2006.01)   **B60C 23/04** (2006.01)
**B60C 23/06** (2006.01)

(52) Cooperative Patent Classification (CPC):
**B60C 23/0416; B60C 11/243; B60C 11/246;
B60C 23/0437; B60C 23/0444; B60C 23/0462;
B60C 23/066**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NXP B.V.**
**5656 AG Eindhoven (NL)**

(72) Inventors:
• **TERTINEK, Stefan**
**5656AG Eindhoven (NL)**

• **Van Sinderen, Jan**
**5656AG Eindhoven (NL)**
• **KÜCHLER, Wolfgang**
**5656AG Eindhoven (NL)**

(74) Representative: **Hardingham, Christopher Mark
NXP Semiconductors
Intellectual Property Group
The Cattle Barn
Upper Ashfield Farm, Hoe Lane
Romsey, Hampshire S051 9NJ (GB)**

Remarks:
Amended claims in accordance with Rule 137(2)
EPC.

(54) **UWB TYRE MONITORING SENSOR, SYSTEM AND ASSOCIATED METHOD**

(57)    A tyre monitoring sensor is disclosed comprising an ultra-wideband, UWB, device, wherein the UWB device is configured to be mounted on a tyre and to be operable in at least a first mode, a second mode, and a third mode; wherein the first mode is a sensing mode, in which the UWB device is operable to determine a value of a physical property of the tyre; wherein the second mode is a communication mode, in which the UWB device is operable to communicate the value to a control unit; wherein the third mode is a ranging mode, in which the UWB device is operable to localise the UWB device relative to a controller node. Associated methods and systems are also disclosed.

Fig. 2

**EP 4 556 260 A1**

## Description

Field

The present disclosure relates to UWB tyre monitoring sensors and systems and associated methods. It particular it relates to tyre pressure monitoring sensors and systems but is not limited thereto.

Background

Tyre pressure monitoring sensors, TPMS, and more generally tyre monitoring sensors, TMS, are widely used to monitor the state, and in particular the pressure, of tyres on each of the wheels of a vehicle such as a car. In a vehicle the tyres are the components that are in direct contact with the road and are subject to the full vehicle weight and driving/braking forces. A proper tyre inflation may therefore be considered as essential since it reduces the wear of the tyre; helps reduce the fuel consumption; improves the handling of the vehicle, and increases the lifetime of the tyre.

Furthermore, an underinflated tyre, that is to say a tyre which has an air pressure less than that for which it is designed (which underinflation may be caused by natural leakage, temperature variation and road hazards, or the like), may lead to overheating which eventually may lead to accidents.

For these reasons, vehicles are typically equipped with tyre-pressure monitoring sensors or systems (TPMS). A tyre-pressure monitoring system is a set of electronic components that monitor the air pressure (and, in some cases, temperature) of the tyre and alerts the driver of the vehicle when the air pressure of a tyre is low.

Indeed, in many jurisdictions it is mandatory for the vehicle to periodically monitor the pressure of tyres and provide an alert to the driver in the event of underpressure or other fault.

In general, a TPMS (system) needs to fulfil three basic functionalities: Firstly, measurement: the air pressure may be measured directly on the valve, for example using a pressure sensor, or inside the tyre, for example using a MEMS (which may be mounted on the rim). Alternatively, the air pressure may be indirectly measured via an observable physical quantity that depends on the tyre pressure. For example, the system may detect a difference in rotational speed between the wheels of the vehicle, the reason being that an underinflation causes a lower wheel/tyre diameter, thereby making the wheel rotate faster than a fully inflated tyre. In another example, a tyre-mounted inertial measurement unit (IMU) can be used to measure linear acceleration data and angular velocity data associated with a tyre. In yet another example, a mm-wave radar sensor is transmitting an RF signal from the rim to the inner surface of a tyre and determines the pressure by processing the radar reflections (echoes) which are indicative of the tyre pressure.

Other sensors involved in the TPMS may be wheel speed sensors, based on electromagnetic induction or on Hall sensor.

Secondly, data transmission: the TPMS (sensor) needs to communicate with the rest of the TPMS (system). Since the sensor is typically located in or on the wheel this may be nontrivial. And thirdly, localisation: the TPM system needs to know which tyre any particular measurement relates to. Conventionally, two or more separate components are used to perform these three separate or disparate functions.

Summary

According to a first aspect of the present disclosure, there is provided a tyre monitoring sensor, TMS, comprising an ultra-wideband, UWB, device, wherein the UWB device is configured to be mounted on a tyre and to be operable in at least a first mode, a second mode, and a third mode; wherein the first mode is a sensing mode, in which the UWB device is operable to determine a value of a physical property of the tyre; wherein the second mode is a communication mode, in which the UWB device is operable to communicate the value to a control unit; wherein the third mode is a ranging mode, in which the UWB device is operable to localise the UWB device relative to a controller node. Using a UWB device operable in three separate modes may reduce the bill of materials in the TMS and may reduce the overall cost of the TMS or a system including the TMS.

In one or more embodiments, the sensing mode is a tyre-property-determination mode.

In one or more embodiments, the physical property is a pressure of the tyre. Cost-effective and reliable measurements of the pressure of the tyres in a vehicle is becoming increasingly important. Embodiments of the present disclosure may provide a particularly convenient method of measuring the tyre pressure.

In one or more other embodiments, the physical property is a tyre-tread thickness of the tyre. Tyre-tread thickness may require to be monitored either alternatively or in addition to tyre pressure.

In one or more embodiments, the TMS is further configured to associate the UWB device with a wheel of a vehicle and on which the tyre is fitted, in response to the determination of a distance between the UWB device and the controller node. Associating the UWB device with a specific wheel, which has the effect of localising the UWB device with respect to the vehicle, may assist in determining to which tyre or wheel a fault is associated.

In one or more embodiments, the UWB device is configured to, subsequent to the association of the UWB device with the wheel, operate in the third mode only in response to a user input. In particular, once the UWB device has been associated with a specific tyre or localised relative to the vehicle, the third mode of operation need not be redeployed until an event occurs whereby the UWB device may have been relocated with respect to the vehicle.

In one or more embodiments, the UWB device is configured to be operated in the first mode with a repetition rate of at least one Hertz. In one or more embodiments, the UWB device is configured to be operated in the second mode with a repetition rate of at least one Hertz. Use of UWB protocol for operation at a relatively high frequency is convenient since UWB protocols typically provide a higher data rate for communication than do other communication modes currently deployed in TMS systems, such as Bluetooth low energy (BLE).

In one or more embodiments, the UWB device is configured to operate in a frequency ranged between 3.1 GHz and 10.6 GHz, and to occupy a bandwidth of at least 500 MHz.

In one or more embodiment the UWB device is operable in the first mode in a first frequency range, and operable in the second mode in a second frequency range, wherein the second frequency range is lower than the first frequency range. In one or more embodiment the first frequency range is in a range between 57 GHz and 64 GHz, and the second frequency range is within a range of 3.1 GHz to 10.6 GHz. Operating the UWB at a relatively high frequency for sensing may facilitate greater measurement precision.

According to a second aspect of the present disclosure, there is provided a tyre monitoring system, comprising a plurality of TMS each as described above, and further comprising the control unit.

The tyre monitoring system may further comprise a UWB transceiver proximal to each TMS, and in electrical communication with the control unit which is distal from each TMS. The control unit may comprise a controller UWB transceiver, which, in use, is unequal distance from each TMS. Locating the controller UWB transceiver at an offset position such that its distance from each of the UWB devices is different may enable unique localisation of each of the UWB device is by means of a direct ranging measurement. In one or more other embodiments, the control unit may comprise more than one UWB transceivers. In such embodiments, triangulation may be used to localise each UWB device.

According to a third aspect of the present disclosure, there is provided a method of operating a tyre monitoring system comprising a UWB device mounted on a tyre, the method comprising: operating the UWB device in a first, sensing, mode to determine a value of a physical property of the tyre; operating the UWB device in a second, communication, mode to communicate the value to a control unit; and operating the UWB device in a third, ranging, mode to determine a distance between the UWB device and a controller node.

In one or more embodiments, the physical property is a pressure of the tyre. In one or more other embodiments, the physical property is a tyre-tread thickness of the tyre.

In one or more embodiments, the method further comprises associating the UWB device with a wheel of a vehicle on which the tyre is fitted, in response to the determination of a distance between the UWB device and the controller node.

In one or more such embodiments, the method may further comprise, subsequent to the associating the UWB device with the wheel, operating the UWB device in the third mode only in response to a user input.

These and other aspects of the invention will be apparent from, and elucidated with reference to, the embodiments described hereinafter.

Brief description of Drawings

Embodiments will be described, by way of example only, with reference to the drawings, in which:

> FIG. 1 illustrates a tyre monitoring sensor according to one or more embodiments of the present disclosure;
> FIG. 2 shows, schematically, a vehicle such as a car on the wheels of which are positioned UWB devices;
> FIG. 3 shows a vehicle having a controller node being an ECU, having therein a UWB transceiver;
> FIG. 4 shows a flow diagram according to one or more embodiments of the present disclosure;
> FIG. 5 shows a flow diagram according to one or more other embodiments of the present disclosure; and
> FIG. 6 shows a flow diagram according to one or more yet other embodiments of the present disclosure.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments

Detailed description of embodiments

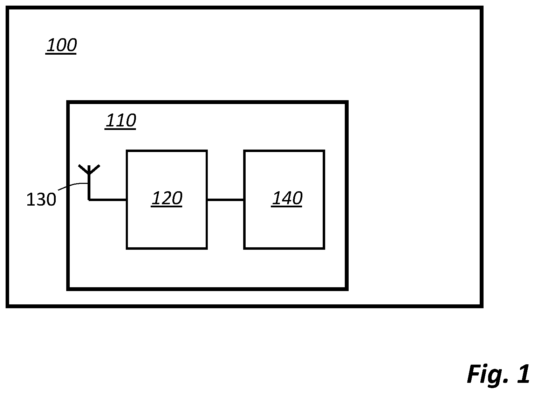

FIG. 1 illustrates a tyre monitoring sensor, TMS, 100 according to one or more embodiments of the present disclosure. The TMS 100 comprises a UWB device 110. The UWB device 110 includes a UWB transceiver part 120, along with one or more antennas 130. The UWB transceiver part 120 is configured to transmit and receive radio signals, generally complying with one or more ultra-wideband standards, such as IEEE 802.15.4a or the FiRa consortium standard. UWB device 110 further comprises a processing unit 140. The processing unit 140 may be integral with the transceiver part 120 or may, as shown, be separate therefrom. In general the processing unit is part of a same integrated circuit as the transceiver part 120.

UWB device 110 is configured to be operable in three modes which are generally separate and distinct, although generally they utilise the same circuitry and components such as the UWB transceiver part 120 and the one or more aerials 130. The first mode is a sensing mode, in which the UWB device is operable to determine a value of a physical property of the tyre; the second mode is a communication mode, in which the UWB device is operable to communicate the value to a control unit; and the third mode is a ranging mode, in which the UWB device is operable to localise the UWB device relative to a controller node.

Considering first the sensing mode; in this mode, the UWB device determines a value of a property associated with the tyre, such as air pressure, wall thickness, tread depth or the like. This mode may be considered to be a tyre-property-determination mode, and in this mode the UWB device typically operates in a UWB radar mode. In particular, the UWB device transmits a signal comprising a radar frame via the one or more antennas 130 to one or more parts, or surfaces, of the tyre. The radar frame may comprise a series of short pulses (e.g. 2 ns wide and repeated at a pulse repetition frequency of 124.8 MHz). The reflection, or echo, of the radar frame from the tyre and in particular from surfaces of the tyre such as the metal rim are received by the UWB device 110. The reflected frame is processed by processing unit 140 in order to determine a channel impulse response (CIR) from the reflected frame. From the CIR, a CIR tap (such as the one showing the strongest signal activity) is determined by processing unit 140, and a phase associated with the CIR tap is determined.

The tyre, together with the rim of a wheel on which the tyre is mounted, acting like a spring-damper system, will generally experience vibrations during rotation, the characteristic frequency of which depends on the stiffness, which in turn depends on the tyre pressure. These vibrations (which correspond to and are evidenced by a periodic distance change) will change the phase of the reflected radar frames. By measuring the phase change, the distance change may be inferred using the equation

$$\Delta\mathrm{d} = \lambda\,\frac{\Delta\,\phi}{2\,\pi}$$

where $\Delta$d is the change in distance, $\Delta\phi$ is the change in phase, and $\lambda$ is the (instantaneous) wavelength of the radar signal; the frequency of the vibration, which is related to and thus indicative of, the tyre pressure, may be determined thereby. For example, at 8 GHz a distance change of 2-4 mm gives a (relative) phase change of -20-40 deg. Thus, in overview, the tyre pressure determines its stiffness, which determines is characteristic frequency, which determines the vibration, (amplitude or frequency), which is measurable in the phase of the radar reflection.

Monitoring a change in this phase over time may provide an indication of deflation of, that is to say a reduced air pressure within, the tyre. In other embodiments, the system may be calibrated in order to determine a measure of the absolute tyre pressure from the phase of the radar reflection. In one or more other embodiments, the UWB device 110 may compute a range-Doppler map and determine the tyre pressure from changes of a Doppler frequency over time at a specific range.

In one or more other embodiments, the physical property which is determined by the radar mode may be the tyre pressure, which may be derived from the distance between the wheel rim and the inner surface of the tyre. The skilled person will appreciate that the tyre deforms due to the weight of the vehicle. When stationary, such as when the vehicle is parked, the local deformation at any position around the circumference of the tyre depends on that part of the circumference is in touch with the ground, so in this case a secondary measurement would be required in order to determine the orientation of the tyre relative to the UWB device and the ground. In yet other embodiments, the tread wear of the tyre may be determined since this may impact the overall stiffness of the tyre. Change in stiffness of the tyre impacts its vibration as mentioned above. Changes in the vibration may be determined by operating the UWB device in radar mode, again as outlined below above.

Stated in general terms, in the sensing mode the UWB device determines a value of a property of the tyre.

In one or more embodiment, and without limitation, the sensing mode may operate using a higher carrier frequency than is used for communication and ranging modes, which will be described in more detailed hereinunder. For example, the sensing mode may operate at frequencies in the 60 GHz range, in particular in a range between 57 GHz and 64 GHz. Using such a relative high frequency may be beneficial, since phase changes due to distance changes are inversely related with the wavelength lambda. Thus, use of higher carrier frequencies (and correspondingly shorter wavelengths) facilitates detection of smaller distance changes, which may be beneficial in determining a tyre property such as the tyre pressure.

In one or more embodiments, the TPMS IC has a UWB transceiver part 120 that supports frequencies in both the 6-10 GHz and the 60 GHz range. In each of these frequency ranges, the IC may operate using pulses of bandwidth larger than 500 MHz (the bandwidth may depend on the frequency range), and so be described as a UWB device. It will be appreciated, however, that embodiments of the present disclosure need not be limited to one specific definition of "UWB".

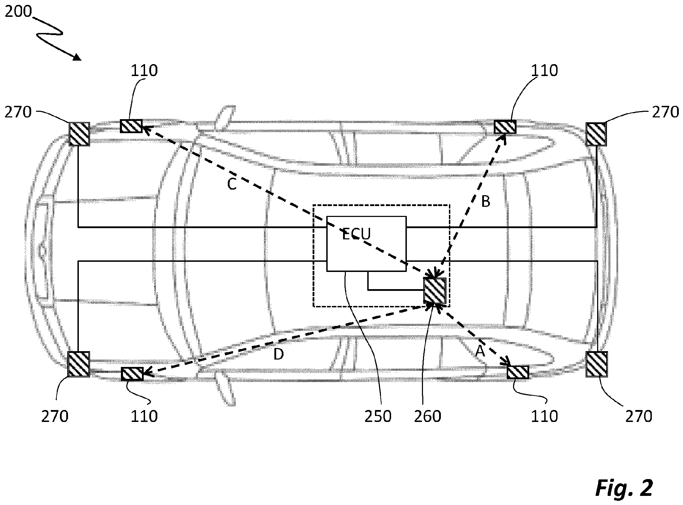

Considering next the second mode, this is a communication mode, in which the UWB device 110 is operable to communicate the value to a control unit (shown at 250 in FIG. 2). In this mode, the UWB device transmits data associated with the physical property of the tyre to a controller node, and in particular may transmit the value of a property of the tyre determined in the sensing mode. The controller node may typically be part of an electronic control unit (ECU) installed in a vehicle. The ECU may be configured to monitor the physical property such as tyre pressure of each of the tyres, and may be configured to report a fault or a change in the physical property. For instance, the ECU may be configured to alert a driver of the vehicle in the instance of a measured change in tyre pressure which may be indicative of a puncture or other fault in the tyre; alternatively, or in addition, the ECU may be configured to alert the driver and/or vehicle supplier in the instance of tread wear or a thickness of the tyre reducing below an acceptable level.

According to one or more embodiments, in order to perform this function, the controller node 250 comprises a UWB transceiver, shown at 260 in FIG. 2, which communicates directly with the UWB device 110. Communication protocols using UWB are well known to the skilled person (for instance IEEE 802.15.4a mentioned above), and the present disclosure does not depend on, and is not limited to, use of any individual specific protocol. The communication between the UWB device 110 and the UWB transceiver 260 may be one-way communication, for instance the UWB device 110 may periodically transmit the value which is received by the UWB transceiver 260. However, in preferred embodiments the communication is two-way communication in which the UWB device 110 both receives information and in particular commands or requests from the ECU 250 which are transmitted by the UWB transceiver 260, and transmits data such as, in particular, the value of the physical parameter, or changes in the value of the parameter to the ECU 250 via the UWB transceiver 260 in response to the commands or requests.

According to one or more other embodiments, the UWB device 110 may communicate with the ECU 250 through near-wheel UWB transceivers. This is illustrated in FIG. 2:

FIG. 2 shows, schematically, a vehicle 200 such as a car, on the wheels of which are positioned UWB devices 110. As described above, the UWB devices 110 are configured to operate in a first, sensing, mode which typically relies on radar-type signal transmission and reception in order to determine the value of a physical property of the tyre, such as the tyre pressure. The UWB devices 110 are configured to also operate in a second, communication mode. As described above, the UWB devices 110 may communicate with a UWB transceiver 260 which is in electrically connected with, or part of, a control unit 250 such as an ECU. As shown the UWB transceiver 260 may be separate from the ECU and connected thereto by a wired link; in alternative embodiments the UWB transceiver 260 may be integral with and contained in the ECU 250.

The vehicle 200 may further include near-wheel UWB transceivers 270 which are positioned near to wheels of the vehicle (for example, one at each corner of the vehicle 200 are shown, or one close to each end of each axle of a multi-axle truck). These near-wheel UWB transceiver 270 may be provided on the vehicle for purposes unrelated to the present disclosure. For example, they may be used for communication with a remote device in order to facilitate keyless remote entry to the vehicle. In case such near-wheel UWB transceivers 270 are available within or on the vehicle 200, they may be used as alternatives to the UWB transceiver 260. For example, the UWB device 110 operable in communication node may communicate with one or more of the near-wheel transceivers 270. In such embodiments, the near-wheel transceivers 270 are in electrical connection with the ECU 250. In particular conventional wired connection means such as CAN bus or LIN bus, with which the skilled person familiar, may be used.

The UWB device 110 according to embodiments of the present disclosure is operable in a third mode, being a ranging mode. The UWB device 110 is operable in this mode in order to identify which wheel and in particular which tyre of the vehicle it relates to. That is to say, the UWB device requires to be localised with respect to the control unit. The localisation may be performed in several different methods, as will be described hereinbelow; however, each of the methods utilises the ranging capability of a UWB transceiver.

One example of localisation of the UWB device by ranging is illustrated in FIG. 2. For this method of localisation to be effective, the control unit, and in particular the UWB transceiver 260, should be offset from the centre of the vehicle both in a front to back direction, and in a left-to-right direction. By locating the UWB transceiver 260 in a suitable offset position, such as that shown in FIG. 2, it may be arranged that the distance between the UWB transceiver 260 and each of the UWB devices 110 is different. That is to say, none of the distances A, B, C and D shown in FIG. 2 are equal. Each UWB device 110 may perform ranging measurements between itself and the UWB transceiver 260. From the values, the control unit 250 can determine on which wheel, for example between front left, front right, back left and back right, the UWB device 110 is located. It will be appreciated that the UWB device is not positioned at the exact centre of the wheel, and as a result the distance between the UWB device 110 and the UWB transceiver 260 may vary as the wheel rotates; however by positioning the UWB transceiver 260 it may be possible to uniquely determine with which wheel the UWB device 110 is associated.

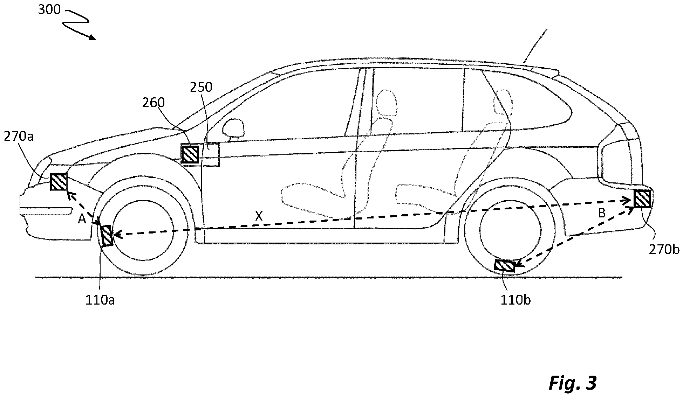

In other embodiments, in particular embodiments in which the vehicle is provided with near-wheel UWB devices 270, these may be used in the ranging process. One example of such a method is illustrated in FIG. 3. FIG. 3 shows a vehicle 300 having a controller node 250 being an ECU, having therein a UWB transceiver 260. Also visible are near-wheel UWB devices 270a and 270b associated with, in this case, the front left and rear left corners of the vehicle respectively. The FIG. also shows UWB device 110a mounted on the front left wheel of the vehicle and UWB device 110b mounted on the rear left wheel of the vehicle. UWB device 110 a performs a set of ranging measurements, with which the skilled person will be familiar, with multiple anchors including near-wheel UWB transceiver 270a and near-wheel UWB transceiver 270b. (The ranging may also be carried out with respect to front right and rear right near-wheel UWB transceivers 270 which are not visible in FIG.3). The ranging may be performed to determine quantitative results - that is to say to determine the actual distances A and X between the UWB device 110a and the front left near-wheel UWB transceiver 270a and back left near-wheel transceiver 270b respectively. Alternatively, the ranging calculations may be merely qualitative, in order to determine that the distance A is less than the distance X (and less than the distances between the UWB device 110a and the other near-wheel UWB transceivers 270). In either case, it may be determined that the UWB device 110a is localised to the front left wheel. This information is provided to controller node 250. For example, the UWB device 110a may operate in the communication node as mentioned above in order to transmit the information directly to the UWB transceiver 260. Alternatively, in other embodiments, the near-wheel UWB device 270a may communicate the information to the controller node 250, for example using a CAN or LIN bus, as already described. In still other embodiments, the near-wheel UWB device 270a may itself be, or act as, the controller node.

The skilled person will appreciate that, in applications in which the vehicle is provided with near-wheel UWB transceivers 270, the above ranging methods may be combined with triangulation techniques in which the distance between the UWB device 110a and two UWB transceivers, the positions of which are already known relative to the vehicle, are used to localise the UWB device 110a. For such triangulation techniques, the UWB transceiver 260 may be used along with one or more of the near-wheel UWB transceivers 270. In yet in other embodiments, the controller node may be provided with a plurality of UWB transceivers 260 which are separated in space. Triangulation may then be carried out using ranging between the UWB device 110a and two or more UWB transceivers 260.

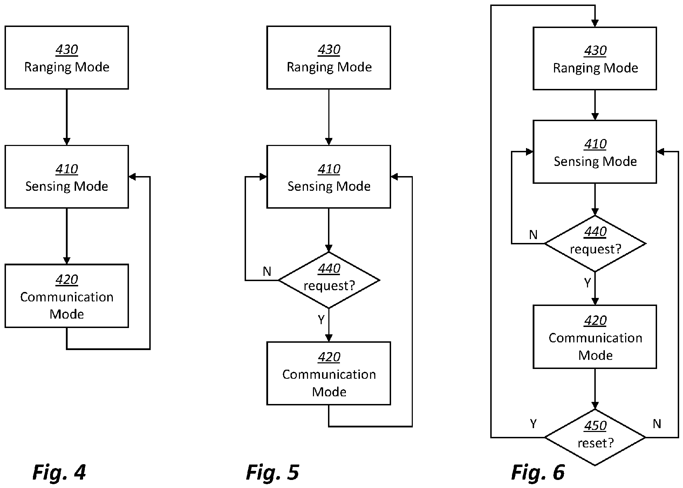

Turning now to FIG. 4, this shows a flow diagram according to one or more embodiments of the present disclosure. In particular, the FIG. shows a method of operating a tyre monitoring system comprising a UWB device mounted on a tyre. As used herein, the term "on a tyre" shall be construed broadly, to include (without limitation) in the tyre, on an inner surface of the tyre, and on a surface of a wheel rim to which the tyre is affixed. The method includes, at 410, operating the UWB device in a first, sensing, mode to determine a value of a physical property of the tyre, and, at 420, operating the UWB device in a second, communication, mode to communicate the value to a control unit. The UWB device is operated alternately in the first, sensing, mode and the second, communication, node. There may be idle periods between each mode of operation. The sensing mode may typically occupy between 10 ms and one second; the communication node may occupy between 1 ms and 100 ms; the communication mode operation may immediately follow the sensing mode, and there may be a gap between the communication mode and a subsequent sensing mode of between 100 ms and several minutes, depending on the application. The method further includes, at 430, operating the UWB device in a third, ranging, mode to determine a distance between the UWB device and a controller node. As a result of this mode, the system may localise the UWB device with respect to the vehicle, and in particular identify which wheel (front nearside, front offside, et cetera), or axle-end, with which the UWB device is associated. This may in turn enable the system to localise any faults, such as in underinflation of the tyre, or tread thickness below an acceptable or legal limit, with respect to the vehicle. As can be seen in FIG. 4, operation in the third mode may occur only once, subsequent to which the UWB device has been localised and the third mode need not be reused. The third mode of operation may be carried out subsequent to the first and second modes of operation or may, as shown, be carried out at an initial phase or time, such as during setup or calibration.

FIG. 5 shows a flow diagram according to one or more other embodiments of the present disclosure. The method is similar to that shown in FIG. 4, except that the sensing mode operation, at 410, is repeatedly initiated without operation in communication node therebetween. Communication mode operation may be undertaken only when requested by the tyre monitoring sensor 100, as illustrated at 440. Such a request may be triggered for instance by the TMS 100 identifying a change in the physical property, such as a reduction in the tyre pressure, or a reduction in the tyre tread. Alternative and without limitation, the request may be triggered periodically, for instance once every second or once every minute, or whenever the vehicle starts to move.

FIG. 6 shows a flow diagram according to one or more yet other embodiments of the present disclosure. The method illustrated is similar to that shown in FIG. 5, with the exception that subsequent to the communication node, the method may operate in ranging mode 430 in response to a request, for example from the controller node to re-establish the localisation of the UWB device with respect to the vehicle. This may occur, for example, in response to a user request, for example after a flat tyre has been amended or a new set of tyres have been attached to the vehicle.

From reading the present disclosure, other variations and modifications will be apparent to the skilled person. Such variations and modifications may involve equivalent and other features which are already known in the art of UWB, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

It is noted that one or more embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Features which are described in the context of separate embodiments may also be provided in combination in a single embodiment. Conversely, various features which are, for brevity, described in the context of a single embodiment, may also be provided separately or in any suitable sub-combination.

For the sake of completeness it is also stated that the term "comprising" does not exclude other elements or steps, the term "a" or "an" does not exclude a plurality, a single processor or other unit may fulfil the functions of several means recited in the claims [delete if not relevant] and reference signs in the claims shall not be construed as limiting the scope of the claims. Furthermore, the word "may" is used in a permissive sense (i.e., meaning having the potential to), rather than the mandatory sense (i.e., meaning must). Similarly, the words "include," "including," and "includes" mean including, but not limited to.

## Claims

1. A tyre monitoring sensor, TMS, comprising an ultra-wideband, UWB, device, wherein the UWB device is configured to be mounted on a tyre and to be operable in at least a first mode, a second mode, and a third mode;

   wherein the first mode is a sensing mode, in which the UWB device is operable to determine a value of a physical property of the tyre;
   wherein the second mode is a communication mode, in which the UWB device is operable to communicate the value to a control unit;
   wherein the third mode is a ranging mode, in which the UWB device is operable to localise the UWB device relative to a controller node.

2. The TMS according to claim 1, where the sensing mode is a tyre-property-determination mode.

3. The TMS according to claim 1 or 2, wherein the physical property is a pressure of the tyre.

4. The TMS according to claim 1 or 2, wherein the physical property is a tyre-tread thickness of the tyre.

5. The TMS according to any preceding claim, further configured to associate the UWB device with a wheel of a vehicle and on which the tyre is fitted, in response to the determination of a distance between the UWB device and the controller node.

6. The TMS according to claim 5, wherein the UWB device is configured to, subsequent to the association of the UWB device with the wheel, operate in the third mode only in response to a user input.

7. The TMS according to claim 5, configured to at least one of periodically operate the UWB device in the first mode with a repetition rate of at least one Hertz, and periodically operate the UWB device in the second mode with a repetition rate of at least one Hertz.

8. The TMS according to any preceding claim, wherein the UWB device is configured to operate in a frequency ranged between 3.1 GHz and 10.6 GHz, and to occupy a bandwidth of at least 500 MHz.

9. The TMS according to any preceding claim being operable in the first mode in a first frequency range within a range between 57 GHz and 64 GHz, and operable in the second mode in a second frequency range within a range of 3.1 GHz to 10.6 GHz.

10. A tyre pressure monitoring system, comprising a plurality of TMS, each according to any proceeding claim, and further comprising the control unit.

11. The tyre pressure monitoring system according to claim 10, further comprising a UWB transceiver proximal to each TMS, and in electrical communication with the control unit which is distal from each TMS.

12. The tyre pressure monitoring system according to claim 10 or 11, wherein the control unit comprises a controller UWB transceiver, which, in use, is unequal distance from each TMS.

13. A method of operating a tyre monitoring system comprising a UWB device mounted on a tyre, the method comprising:

    operating the UWB device in a first, sensing, mode to determine a value of a physical property of the tyre;
operating the UWB device in a second, communication, mode to communicate the value to a control unit; and
operating the UWB device in a third, ranging, mode to determine a distance between the UWB device and a controller node.

14. The method of claim 13, wherein the physical property is a one of a pressure of the tyre and a tyre-tread thickness of the tyre.

15. The method of any one of claim 13 or 14, further comprising associating the UWB device with a wheel of a vehicle and on which the tyre is fitted, in response to the determination of a distance between the UWB device and the controller node.

**Amended claims in accordance with Rule 137(2) EPC.**

1. A tyre monitoring sensor (100), TMS, comprising an ultra-wideband, UWB, device (110),

 wherein the UWB device is configured to be mounted on a tyre and to be operable in at least a first mode, a second mode, and a third mode;
 wherein the first mode is a sensing mode (410), in which the UWB device is operable in a UWB radar mode to determine a value of a physical property of the tyre;
 wherein the second mode is a communication mode (420), in which the UWB device is operable to communicate the value to a control unit;
 wherein the third mode is a ranging mode (430), in which the UWB device is operable to localise the UWB device relative to a controller node.

2. The TMS according to claim 1, where the sensing mode is a tyre-property- determination mode.

3. The TMS according to claim 1 or 2, wherein the physical property is a pressure of the tyre.

4. The TMS according to claim 1 or 2, wherein the physical property is a tyre-tread thickness of the tyre.

5. The TMS according to any preceding claim, further configured to associate the UWB device with a wheel of a vehicle and on which the tyre is fitted, in response to the determination of a distance between the UWB device and the controller node.

6. The TMS according to claim 5, wherein the UWB device is configured to, subsequent to the association of the UWB device with the wheel, operate in the third mode only in response to a user input (440).

7. The TMS according to claim 5, configured to at least one of periodically operate the UWB device in the first mode with a repetition rate of at least one Hertz, and periodically operate the UWB device in the second mode with a repetition rate of at least one Hertz.

8. The TMS according to any preceding claim, wherein the UWB device is configured to operate in a frequency range between 3.1 GHz and 10.6 GHz, and to occupy a bandwidth of at least 500 MHz.

9. The TMS according to any preceding claim being operable in the first mode in a first frequency range within a range between 57 GHz and 64 GHz, and operable in the second mode in a second frequency range within a range of 3.1 GHz to 10.6 GHz.

10. A tyre pressure monitoring system, comprising a plurality of TMS, each according to any proceeding claim, and further comprising the control unit (260).

11. The tyre pressure monitoring system according to claim 10, further comprising a UWB transceiver (270) proximal to each TMS, and in electrical communication with the control unit which is distal from each TMS.

12. The tyre pressure monitoring system according to claim 10 or 11, wherein the control unit comprises a controller UWB transceiver, which, in use, is unequal distance from each TMS.

13. A method of operating a tyre monitoring system comprising a UWB device (110) mounted on a tyre, the method comprising:

 operating the UWB device in a first, sensing, mode (410) as a UWB radar to determine a value of a physical property of the tyre;
 operating the UWB device in a second, communication, mode (420) to communicate the value to a control unit; and
 operating the UWB device in a third, ranging, mode (430) to determine a distance between the UWB device and a controller node (260).

14. The method of claim 13, wherein the physical property is a one of a pressure of the tyre and a tyre-tread thickness of the tyre.

15. The method of any one of claim 13 or 14, further comprising associating the UWB device with a wheel of a vehicle and on which the tyre is fitted, in response to the determination of a distance between the UWB device and the controller node.

*Fig. 1*

Fig. 2

**Fig. 3**

**430**
Ranging Mode

**410**
Sensing Mode

**420**
Communication
Mode

*Fig. 4*

**430**
Ranging Mode

**410**
Sensing Mode

N **440**
request?

Y

**420**
Communication
Mode

*Fig. 5*

**430**
Ranging Mode

**410**
Sensing Mode

N **440**
request?

Y

**420**
Communication
Mode

Y **450**
reset? N

*Fig. 6*

Europäisches
Patentamt

European
Patent Office

Office européen
des brevets

# EUROPEAN SEARCH REPORT

**Application Number**

EP 23 21 0299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 911 712 A1 (SIEMENS VDO AUTOMOTIVE SAS [FR]) 25 July 2008 (2008-07-25) | 1-3,5,6, 8,10-15 | INV. B60C11/24 |
| Y | * page 6 - page 8; claims 1-7; figure 1 * | 4,7 | B60C23/04 |
| A | | 9 | B60C23/06 |
| | ----- | | |
| Y | US 11 607 915 B2 (CONTINENTAL AUTOMOTIVE SYSTEMS INC [US]) 21 March 2023 (2023-03-21) | 4,7 | |
| A | * column 3 - column 5; figures 1-7 * | 1-3,5,6, 8-15 | |
| | ----- | | |
| A | US 10 399 393 B1 (TROTTA SAVERIO [DE]) 3 September 2019 (2019-09-03) * column 3 - column 11; figures 3-6 * | 1-15 | |
| | ----- | | |

**TECHNICAL FIELDS SEARCHED (IPC)**

B60C

The present search report has been drawn up for all claims

| Place of search | Date of completion of the search | Examiner |
|---|---|---|
| Munich | 8 April 2024 | Billen, Karl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 0299

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2024

| Patent document cited in search report | | Publication date | Patent family member(s) | | Publication date |
|---|---|---|---|---|---|
| FR 2911712 | A1 | 25-07-2008 | NONE | | |
| US 11607915 | B2 | 21-03-2023 | NONE | | |
| US 10399393 | B1 | 03-09-2019 | EP<br>US | 3584094 A1<br>10399393 B1 | 25-12-2019<br>03-09-2019 |